# EUROPEAN PATENT SPECIFICATION

(11) **EP 3 550 248 B1**
(45) Date of publication and mention of the grant of the patent: **22.11.2023**
(21) Application number: 19163297.5
(22) Date of filing: 15.03.2019
(51) Int. Cl.: F28D 9/00, B33Y 10/00, B33Y 80/00, B23P 15/26

(54) **INTEGRAL HEAT EXCHANGER CORE REINFORCEMENT**
INTEGRALE WÄRMETAUSCHERKERNVERSTÄRKUNG
RENFORCEMENT DE NOYAU D'ÉCHANGEUR DE CHALEUR INTÉGRÉ

(30) Priority: 16.03.2018 US 201815923604
(43) Date of publication of application: 09.10.2019
(73) Proprietor: Hamilton Sundstrand Corporation, Charlotte, NC 28217-4578 (US)
(72) Inventor: RUIZ, Gabriel, Southwick, MA 01077 (US); STREETER, James, Torrington, CT 06790 (US); KELLEY, Ryan Matthew, Granby, CT 06035 (US); ZAGER, Michael, Windsor, CT 06095 (US)
(74) Representative: Dehns

(56) References cited:
- WO-A1-2006/102736
- DE-A1-102015 204 014
- GB-A- 2 537 503
- US-A1- 2017 023 311
- US-A1- 2017 023 312

## Description

### BACKGROUND

The disclosure is directed generally to heat exchangers, and more specifically to cores and mounts for heat exchangers.

Mounts are used to connect the heat exchanger to other components or the aircraft directly. There are loads applied from the connecting body to the heat exchanger creating a stress at the connection between the mount pad and the core. Typically, the mount is brazed and/or welded to the core and the load is transmitted through the joint and internal core components, at roughly a 45° angle outward from the joint. WO 2006/102736 A1 discloses a plate and fin heat exchanger comprising plates and fins of a constant thickness. DE 10 2015 204014 A1 discloses a further plate heat exchanger, having a trapezoidal format made by additive manufacturing, with a decreasing length of plates and fins in a vertical direction and also comprising plates and fins of a constant thickness.

### SUMMARY

A heat exchanger core is provided as defined by claim 1.

A heat exchanger assembly is provided as defined by claim 3.

A method of making a heat exchanger is provided as defined by claim 4.

### BRIEF DESCRIPTION OF THE DRAWINGS

FIG. 1 includes multiple views of an example heat exchanger.
FIG. 2A shows a conventional core geometry of a plate-and-fin heat exchanger.
FIG. 2B is a magnified view of a portion of FIG. 2A.
FIG. 3A shows an updated example core geometry for a plate-and-fin heat exchanger according to the disclosure.
FIG. 3B is a magnified view of a portion of FIG. 3A.
FIG. 4 is a conventional mounting arrangement for a shell-and-tube core of a heat exchanger.
FIG. 5 shows an example mounting arrangement for a core of a shell-and-tube heat exchanger according to the disclosure.
FIG. 6 shows a strengthened core topology and mounting arrangement for a second heat exchanger embodiment.
FIGS. 7A and 7B depict a third heat exchanger embodiment with mounts integrally formed with one or more manifolds.

### DETAILED DESCRIPTION

Integrally building a mount with the core using additive manufacturing or castings, removes the need to braze, machine, and/or weld the mount to a pad. This can increase the effective contact area between the mount and the core, allowing the load to be distributed better through the core components. Additionally, the structure can be optimized for weight without having to maintain unnecessary material needed to connect the mount to the heat exchanger. Assembly weight, installation time, installation space, and component count may all be reduced.

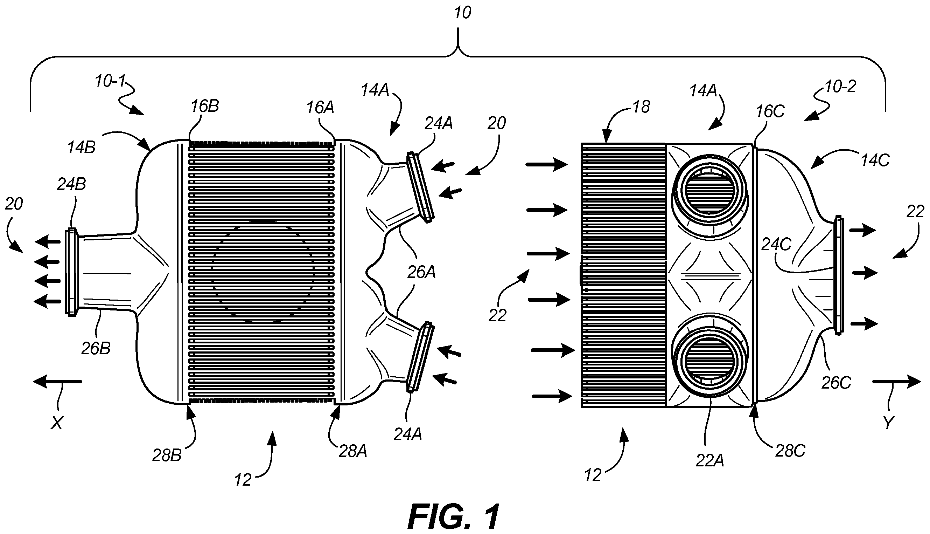

FIG. 1 shows an example heat exchanger assembly 10, with first and second views 10-1 and 10-2. At its most basic, assembly 10 includes core 12 and one or more manifolds 14A, 14B, 14C meeting at respective manifold/core interfaces 16A, 16B, 16C. First manifold 14A and second manifold 14B are connected to and in fluid communication with core 12 at respective first and second manifold/core interfaces 16A, 16B. Core 12 generally receives and places a plurality of mediums (here 20, 22) in at least one heat exchange relationship with one another. As is generally known in the art, core 12 can include structures, walls, tubes, etc. to facilitate a crossflow, counter-flow, micro-channel, or other hybrid heat exchange relationship. In this particular non-limiting example, heat exchanger assembly 10 can include a plate-and-fin heat exchanger or any other type of heat exchanger that, generally, consists of alternating layers (e.g., micro-channel heat exchangers). Assembly 10 can also include one or more mount areas (not shown in FIG. 1) for supporting heat exchanger assembly 10 in a larger system.

One or more manifolds (here, first manifold 14A) include a first end 26A distal from core 12 with at least one port 24A adapted to receive (or discharge) a first medium of the plurality of mediums (e.g., medium 20 or 22). Second end 28A of first manifold 14A is joined to core 12 at first manifold/core interface 16A, and is adapted to transfer first medium 20 or second medium 22, either to or from a plurality of first heat exchange passages in core 12. Similarly, second manifold 14B includes a first end 26B and a second end 28B, the first end distal from core 12 with at least one port 24B adapted to discharge (or receive) the first medium 20. Second end 28B of second manifold 14B is joined to core 12 at second manifold/core interface 16B, and is adapted to transfer first medium 20 either to or from a plurality of first heat exchange passages in core 12.

Third manifold 14C includes first end 26C and second end 28C for medium 22 to exit core 12 via port 24C. Thus, via manifolds 14A, 14B, 14C, core 12 receives first medium 20 flowing in first direction X and second medium 22 of the plurality of mediums flowing in second direction Y at a zero or nonzero angle relative to first direction X. These directions may vary from layer to layer within the core, for example in a counterflow heat exchanger core, versus the crossflow arrangement shown in FIG. 1.

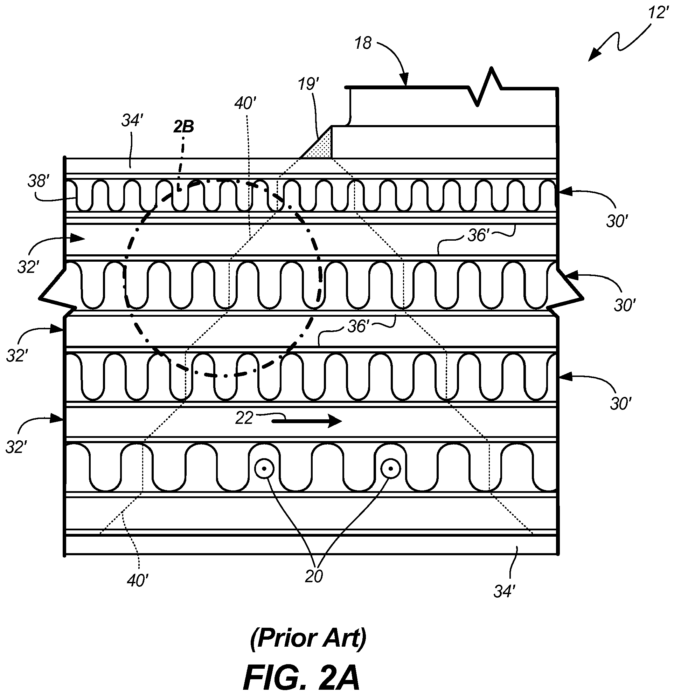

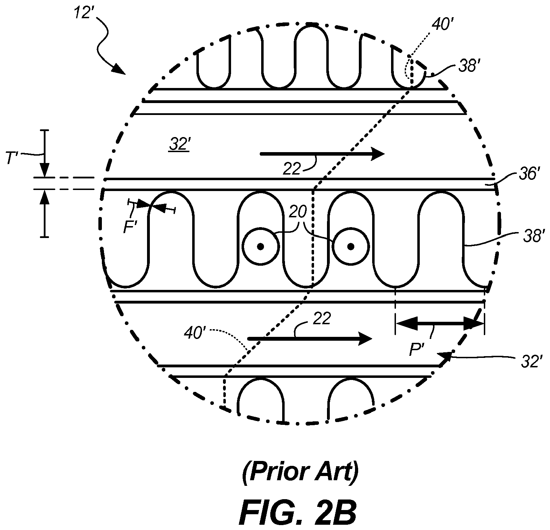

FIGS. 2A and 2B show a conventional geometry for a plate-and-fin heat exchanger core 12'. Specifically, core 12' includes walls defining a topology of alternating flow layers 30', 32' respectively for first medium 20 and second medium 22. Between upper and lower end plates 34', parting plates 36' separate and define alternating flow layers 30', 32'. In this example, first fins 38' provide additional heat transfer area for first medium 20 in first flow layers 30'. Optionally, second fins (omitted for clarity) can be provided in second flow layers 32' for providing additional heat transfer area for second medium 22.

In a mount arrangement for a conventional heat exchanger core, such as is shown in FIGS. 2A and 2B, certain parts of core 12', particularly load-bearing portion or portions of layers immediately adjacent to the mount location or joint bear a disproportionate amount of the weight, vibrational, and other loads as compared to other parts more distal from the load-bearing portion. This has traditionally been dealt with, due to manufacturability and cost concerns, by uniformly using thicker plate or fin material throughout individual layers in order to absorb and transmit the loads as shown, while preventing damage to the unit.

As can be seen in FIGS, 2A and 2B, each layer 30' of conventional core 12' has generally uniform topology though adjacent layers 30' likely differ. Each individual parting plate 36' has a uniform plate thickness T' across an individual heat transfer layer 30', while each fin 38' has substantially uniform fin thickness F' and pitch P' (e.g., spacing between corrugations) across an individual heat transfer layer 30'. Thus conventionally, plates 36' closer to the mount location(s) 18' and/or joint(s) 19' may have a greater thickness than those below. Similarly, conventional fins 38' in layers close to mount location(s) 18' and/or joint(s) 19' may have a greater fin thickness F' and/or lesser pitch P' (corrugations closer together) than those fins 38' in layers below (i.e., distal from) mount location(s) 18'. But again, thickness and pitch are conventionally uniform across each individual layer.

Conventional layer strengthening thus includes areas of the core outside of the parts nearest to the mount area and thus most responsible for load bearing. These regions are identified outside of dashed line 40' representing approximately a perimeter of the expected or actual load path. In conventional welded mounts 18' and joints 19', the load path extends approximately 45° outward through core 12', but the angle and exact path may vary depending on the types and numbers of attachment points. Regardless of the particular load path 40', arrangements like those in FIGS. 2A and 2B unnecessarily add weight, reduce available volume for throughput of the mediums, and can impede conduction of thermal energy through the heat transfer surfaces because non-load-bearing areas of the core are unnecessarily oversized.

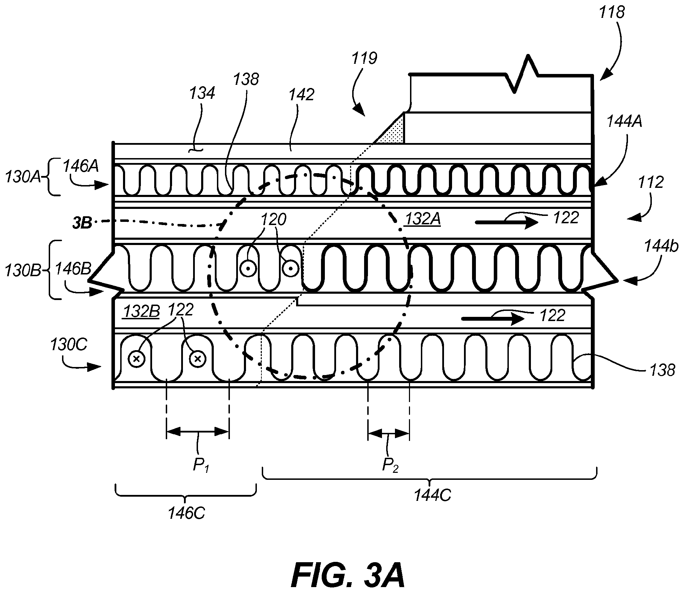

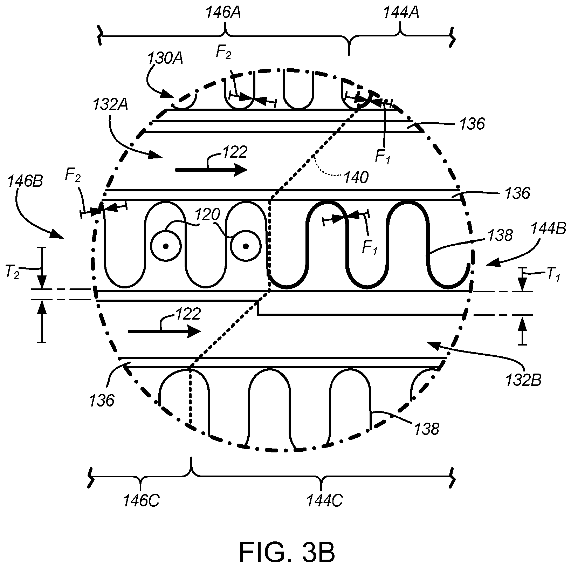

FIGS. 3A and 3B show an updated example core 112 which, like conventional core 12' in FIGS. 2A and 2B, includes a plurality of walls defining a plurality of alternating layers for placing first and second mediums 120, 122 in at least one heat exchange relationship. FIGS. 3A and 3B show first layers 130A, 130B, 130C and second layers 132A, 132B of core 112, along with load path 140. Each of first layers 130A, 130B, 130C has at least one corresponding load-bearing portion 144A, 144B, 144C aligned with, and adjacent to, at least a first mount location 118 and/or joint 119 on a perimeter 142 of core 112. Perimeter can be defined by, for example, closure bars or end plates 134. One or more non-load-bearing portions 146A, 146B, 146C of each layer 130A, 130B, 130C can be located distal from load-bearing portion(s) 144A, 144B, 144C. Load-bearing portions of second layers 132A, 132B can also be strengthened in a similar manner, but these are omitted for clarity.

To optimize aspects of the core design with minimal weight addition and flow disruption, a topology of the first load-bearing portion 144A has an overall load bearing capacity greater than a load bearing capacity of the non-load-bearing portion 146A in the same layer 130A. That is, at least one layer 130A of core 112 is locally strengthened by varying one or more aspects of the walls (e.g., plates, fins, tubes, etc.) defining the passages in the load-bearing portion. To save weight and material costs, parts of the layer remain sufficiently thin and/or well-spaced to manage desired medium flows. For illustrative purposes, first layers 130A, 130B, 130C shows one or more variation or adaptation in the respective load bearing portion 144A, 144B, 144C; however, it will be recognized that multiple aspects can be modified in each load-bearing portion(s) of one or more layers. In layer 130C, for example, a pitch P₂ of the plurality of corrugated fins 138 in load-bearing portion 144C is greater than a pitch P₁ of the plurality of corrugated fins 138 in the same layer (130C) in the non-load-bearing portion 146C. That is, the sheet(s) forming the fins in layer 130C are further compressed in load-bearing portion 144C so that each wall or fin is closer to an adjacent one as compared to the spacing in non-load-bearing portion 146C. This can reduce available flow area locally, but by maintaining or even expanding pitch in non-load-bearing portion 146C, overall heat transfer and/or pressure drop can be substantially maintained relative to conventional designs.

In first layers 130A, 130B, for medium 120, a fin thickness F₁ of the plurality of fins 138 in load-bearing portions 144A, 144B is greater than a fin thickness F₂ of the plurality of corrugated fins 138 in the same layer (here 130A, 130B) in the respective non-load-bearing portions 146A, 146B. The locally thicker material in the load-bearing portion again can absorb and transmit forces, while allowing for thinner fin material elsewhere. This again may reduce local flow to a lesser degree as compared to a conventional approach
In addition to the fins, dimensions or other aspects of parting plates can also be varied in the load-bearing portion(s) to improve strength versus the corresponding non-load-bearing portion. Here, in FIGS. 3A and 3B a thickness T₁ of one or more parting plates 136 separating the plurality of corrugated fins in the first load-bearing portion 144B is less than a thickness T₂ of the plurality of parting plates in the same layer in non-load-bearing portion 146B.

It will be recognized that load path 140, is merely illustrated for simplicity as a dashed line, but should not be read as a precise stepwise difference between the load-bearing and non-load-bearing portions in all cases. Rather, depending on the precise construction of the unit, the mount, and the loads applied thereto, there is somewhat of a gradual transition region on either side of dashed line 140 (and other load paths described herein). The dashed line(s) are therefore merely intended to represent an approximate midpoint of this transition region in order to more clearly and simply delineate the load-bearing and non-load-bearing portions without adding clutter to the figures.

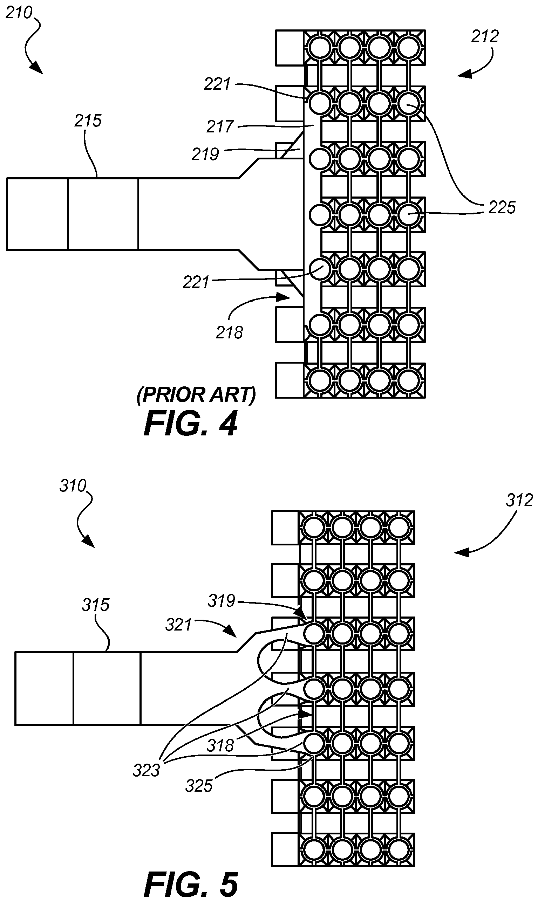

Additionally or alternatively, a mount portion of the core is integrally formed with at least one of a mount pad and an end plate of the heat exchanger core. FIG. 4 shows a heat exchanger and accompanying mount arrangement, while FIG. 5 shows the mount includes at least one mount arm integrally supporting at least one element, a tube in this case, of the heat exchanger core. Additional embodiments show the heat exchanger assembly supportable by several mounts integrally formed with one or more manifolds.

Beginning with FIG. 4, a conventional mounted heat exchanger assembly 210 includes core 212, mount bar 215, mount pad 217, mount location 218 on core 212, and joint(s) 219. Conventionally, mount pad 217 is attached to core 212 at mount location 218, in particular to multiple tubes 225 in a shell-and-tube arrangement shown herein. Mount pad 217 can be conventionally formed, for example, by machining, extrusion, and/or casting. Subsequently, mount bar 215 is welded, brazed, or otherwise metallurgically joined around joint 219 near a perimeter of mount pad 217, securing core 212 to one or more support structures (via mount bar 215). In this arrangement, loads from the aircraft or other mounting support structures (not shown) create high stress loads at connections 221 between mount pad 217 and tubes 225 in core 212.

In contrast, FIG. 5 includes assembly 310 with core 312 directly metallurgically joined to the mount by at least one joint 319, with core 312 adapted for receiving and placing a plurality of mediums in at least one heat exchange relationship. Joint 319 includes at least one passage wall (e.g., walls of at least one tube 325) integrally formed with mount bar 315 at mount location 318. As in FIG. 4, the heat exchanger comprises a shell-and-tube heat exchanger or a micro-channel heat exchanger.

Mount 321 includes at least one clevis leg or bar 323 integrally formed with and supported by at least one tube 325 of heat exchanger core 312. This allows for a substantially uniform connection between mount bar 315 and core 312, rather than merely about edges of mount pad 217 in FIG. 4.

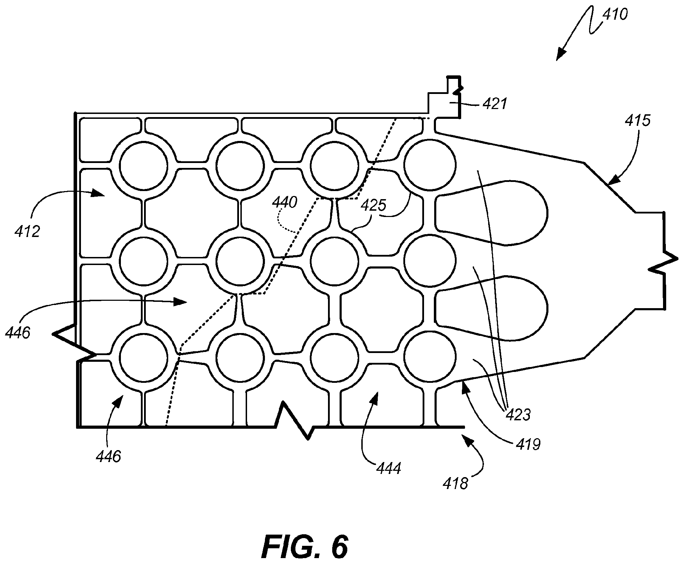

FIG. 6 shows an alternate embodiment of heat exchanger assembly 410 for an example shell-and-tube heat exchanger core 412. Core 412, adapted for receiving and placing a plurality of mediums in at least one heat exchange relationship, includes one or more tubes 425 directly metallurgically joined around mount location 421 by at least one joint such as clevis leg or bar 423. Joint 419 includes at least one passage wall (e.g., walls of at least one tube 425) integrally formed with a mount bar (not shown in FIG. 6) at mount location (s) 418.

Mount 421 includes at least one branch 423 integrally supporting at least one tube 425 of shell-and-tube heat exchanger core 412. Mount 421 is also integrally formed with at least one of a mount pad and an end plate (not shown) of heat exchanger core 412. This allows for a substantially uniform connection between mount bar 415 and core 412, rather than merely about edges of mount pad (e.g., 217 in FIG. 4).

Core 412 also includes first load-bearing region 444 in connection with the joint/mount and a first non-load bearing region 446 outward of the non-load bearing region. As in FIGS. 3A and 3B, the heat exchanger core includes a different (stronger) topology in at least one load-bearing region (444) versus than in a corresponding at least one non-load-bearing region 446 in the same layer.

In this example, first load-bearing region 444 can be aligned with the at least one integrally formed joint 419 such that load path 440 includes both first load-bearing region 444 and the at least one integrally formed joint 419. Here, that includes thicker walled tubes 425 in load-bearing region 444 as compared to those outside (in the non-load-bearing region 446).

Embodiments of heat exchangers described herein can leverage additive manufacturing or any other manufacturing method or methods (e.g., casting) that allows one to construct continuous, homogeneous transitions between one or more mounts and the core, the manifold, or other assembly components. Continuous, homogeneous transitions between elements within the core can closely tailor load bearing capacity. Additive manufacturing is also useful in reducing mass and/or weight of different elements of the assembly, as well as reducing the number of details and associated assembly time. Further, additive manufacturing allows the mount to be optimized with less constraint on how to connect the mount to the heat exchanger core. The entire connection between the mount and heat exchanger is made by metallurgical bond instead of just welded edges as in the conventional approaches. The need for brazing the mount to achieve a uniform load distribution is eliminated, as is a more complicated brazing fixture that is typically required for brazed mounts. Quality of the resulting assembly is improved because full (or even 80%) braze j oint coverage and/or full penetration welds are not consistently achievable, resulting in rejection of some parts when manufactured by brazing and/or welding. With additive manufacturing, material strength is not degraded as a result of welding and brazing, and the result is well-controlled joint topology.

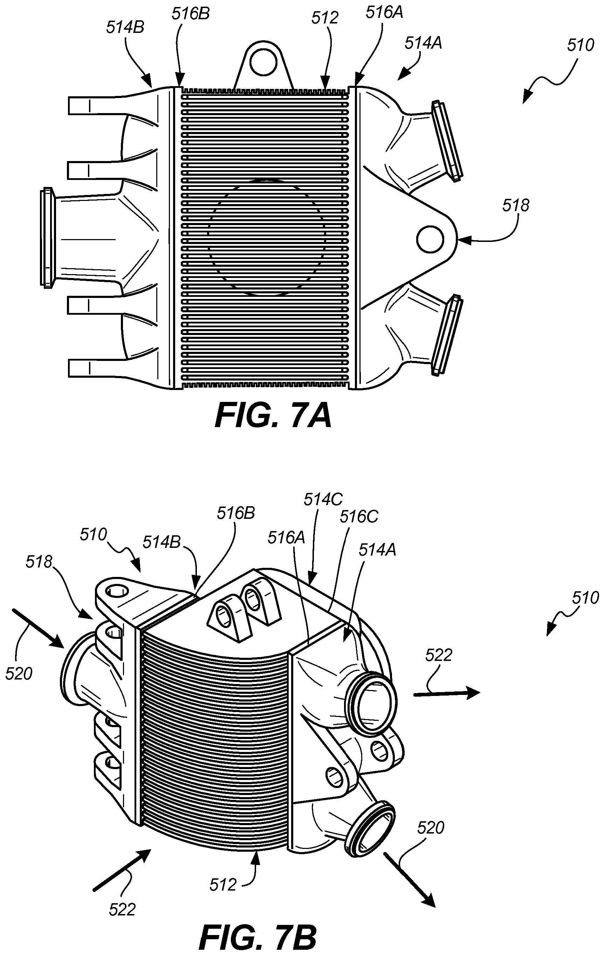

FIGS. 7A and 7B show two different perspective views of an alternate embodiment of heat exchanger assembly 510. Manifolds 514A, 514B, 514C meet core 512 at corresponding interfaces 516A, 516B, 516C. Assembly 510 has several mount locations 518 formed integrally with at least one manifold (here manifolds 514A, 514B). Like other embodiments, core 512 places first and second mediums 520, 522 in at least one heat exchange relationship.

With that, a method of making a heat exchanger includes forming a housing for a heat exchanger core and additively manufacturing the heat exchanger core. This can be done, for example, by forming a first load-bearing region in connection with the joint and/or mount, and forming a first non-load bearing region outward of the non-load bearing region. In certain embodiments, the core includes a different topology in the first load-bearing region than in the first non-load-bearing region. In certain of these embodiments, the core is formed such that the first load-bearing region is aligned with the at least one integrally formed joint such that a load path includes both the first load-bearing region and the at least one integrally formed joint.

In certain embodiments, the mount is formed with at least one core wall (e.g. one or more tube walls of a shell-and-tube heat exchanger assembly) via one or more of a casting process or an additive manufacturing process. In certain of these embodiments, the mount is integrally formed with at least one of a mount pad and an end plate of the heat exchanger core.

In each example, the important manufacturing aspect includes integrally forming parts to have the desired local impact. For example, one can integrally form the mount with at least one core wall of the heat exchanger assembly via one or more of a casting process or an additive manufacturing process. The mount includes at least one clevis integrally supporting at least one tube of the shell-and-tube heat exchanger. The mount can be integrally formed with at least one of a mount pad and an end plate of the heat exchanger core. The core can be formed with a first load-bearing region in connection with the joint/mount and a first non-load bearing region outward of the non-load bearing region. The core includes a different topology in the first load-bearing region than in the first non-load-bearing region. The first load-bearing region is aligned with the at least one integrally formed joint such that a load path includes both the first load-bearing region and the at least one integrally formed j oint.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heat exchanger core comprising:
a plurality of parallel and spaced apart plates (136) defining a plurality of first layers (130A-C) and a plurality of second layers (132A-C) in an alternating fashion, each of the plurality of first layers comprising:
a load-bearing portion (144A-C) adjacent a mount portion (118) on a perimeter (142) of the core, the load-bearing portion (144) comprising a plurality of adjacent corrugated fins (138); and
a non-load-bearing portion (146A-C) adjacent the load-bearing portion and on a side opposite the mount portion, the non-load-bearing portion comprising a plurality of adjacent corrugated fins (138); and
a transition region joining the plurality of corrugated fins of the load-bearing portion and the plurality of corrugated fins of the non-load-bearing portion;
wherein a thickness of the plurality of corrugated fins in the first load-bearing portion is greater than a thickness of the plurality of corrugated fins in the same layer in the non-load-bearing portion;
wherein a thickness of a plurality of plates separating the plurality of corrugated fins in the first load-bearing portion is greater than a thickness of the plurality of plates in the same layer in the non-load-bearing portion; and wherein the at least one of the layers of the core also includes a transition region between the load-bearing portion and the non-load-bearing portion.

2. The core of claim 1, wherein a pitch of the plurality of corrugated fins in the first load-bearing portion is less than a pitch of the plurality of corrugated fins in the same layer in the non-load-bearing portion.

3. A heat exchanger assembly comprising:
a mount (118) for supporting a heat exchanger in a system; and
a heat exchanger core (112) as claimed in any preceding claim.

4. A method of making a heat exchanger, the method comprising:
forming a housing for a heat exchanger core;
forming a first mount portion;
additively manufacturing a heat exchanger core as claimed in any of claims 1 or 2, the step comprising:
forming the first load-bearing region in connection with the mount; and
forming the first non-load bearing region outward of the non-load bearing region.

5. The method of claim 4, wherein the core includes a different topology in the first load-bearing region than in the first non-load-bearing region.

6. The method of claim 4 or 5, further comprising:
forming a mount for a heat exchanger assembly; and
integrally forming the mount with at least one core wall or at least one manifold wall of the heat exchanger assembly via one or more of a casting process or an additive manufacturing process, and preferably wherein the mount is integrally formed with at least one of a mount pad and an end plate of the heat exchanger core.

## Patentansprüche

1. Wärmetauscherkern, umfassend:
eine Vielzahl von parallelen und beabstandeten Platten (136), die abwechselnd eine Vielzahl von ersten Schichten (130A-C) und eine Vielzahl von zweiten Schichten (132A-C) definieren, wobei jede der Vielzahl von ersten Schichten Folgendes umfasst:
einen lasttragenden Abschnitt (144A-C), der an einen Befestigungsabschnitt (118) an einem Umfang (142) des Kerns angrenzt, wobei der lasttragende Abschnitt (144) eine Vielzahl benachbarter gewellter Rippen (138) umfasst; und
einen nicht-lasttragenden Abschnitt (146A-C), der an den lasttragenden Abschnitt angrenzt und sich auf einer dem Befestigungsabschnitt gegenüberliegenden Seite befindet, wobei der nicht-lasttragende Abschnitt eine Vielzahl von benachbarten gewellten Rippen (138) umfasst; und
einen Übergangsbereich, der die Vielzahl der gewellten Rippen des lasttragenden Abschnitts und die Vielzahl der gewellten Rippen des nicht-lasttragenden Abschnitts verbindet;
wobei eine Dicke der Vielzahl von gewellten Rippen in dem ersten lasttragenden Abschnitt größer ist als eine Dicke der Vielzahl von gewellten Rippen in der gleichen Schicht in dem nicht-lasttragenden Abschnitt;
wobei eine Dicke einer Vielzahl von Platten, die die Vielzahl von gewellten Rippen in dem ersten lasttragenden Abschnitt trennen, größer ist als eine Dicke der Vielzahl von Platten in der gleichen Schicht in dem nicht-lasttragenden Abschnitt; und
wobei die mindestens eine der Schichten des Kerns auch einen Übergangsbereich zwischen dem lasttragenden Abschnitt und dem nicht-lasttragenden Abschnitt beinhaltet.

2. Kern nach Anspruch 1, wobei eine Teilung der Vielzahl von gewellten Rippen in dem ersten lasttragenden Abschnitt kleiner ist als eine Teilung der Vielzahl von gewellten Rippen in der gleichen Schicht in dem nicht-lasttragenden Abschnitt.

3. Wärmetauscheranordnung, umfassend:
eine Befestigung (118) zum Halten eines Wärmetauschers in einem System; und
einen Wärmetauscherkern (112) nach einem der vorhergehenden Ansprüche.

4. Verfahren zum Herstellen eines Wärmetauschers, wobei das Verfahren Folgendes umfasst:
Bilden eines Gehäuses für einen Wärmetauscherkern;
Bilden eines ersten Befestigungsabschnitts;
additives Fertigen eines Wärmetauscherkerns nach einem der Ansprüche 1 oder 2, wobei der Schritt Folgendes umfasst:
Bilden der ersten tragenden Region in Verbindung mit der Befestigung; und
Bilden der ersten nicht-lasttragenden Region auswärts gerichtet von der nicht-lasttragenden Region.

5. Verfahren nach Anspruch 4, wobei der Kern in der ersten lasttragenden Region eine andere Topologie beinhaltet als in der ersten nicht-lasttragenden Region.

6. Verfahren nach Anspruch 4 oder 5, ferner umfassend:
Bilden einer Befestigung für eine Wärmetauscheranordnung; und
integrales Bilden der Befestigung mit mindestens einer Kernwand oder mindestens einer Verteilerwand der Anordnung des Wärmetauschers über einen oder mehrere Gießprozesse oder einen additiven Fertigungsprozess, wobei die Befestigung vorzugsweise integral mit mindestens einem von einem Befestigungspolster und einer Endplatte des Wärmetauscherkerns gebildet wird.

## Revendications

1. Noyau d'échangeur de chaleur comprenant :
une pluralité de plaques parallèles et espacées (136) définissant une pluralité de premières couches (130A à C) et une pluralité de secondes couches (132A à C) de manière alternée, chacune de la pluralité de premières couches comprenant :
une partie porteuse (144A à C) adjacente à une partie de support (118) sur un périmètre (142) du noyau, la partie porteuse (144) comprenant une pluralité d'ailettes ondulées adjacentes (138) ; et
une partie non porteuse (146A à C) adjacente à la partie porteuse et sur un côté opposé à la partie de support, la partie non porteuse comprenant une pluralité d'ailettes ondulées adjacentes (138) ; et
une région de transition joignant la pluralité d'ailettes ondulées de la partie porteuse et la pluralité d'ailettes ondulées de la partie non porteuse ;
dans lequel une épaisseur de la pluralité d'ailettes ondulées dans la première partie porteuse est supérieure à une épaisseur de la pluralité d'ailettes ondulées dans la même couche dans la partie non porteuse ;
dans lequel une épaisseur d'une pluralité de plaques séparant la pluralité d'ailettes ondulées dans la première partie porteuse est supérieure à une épaisseur de la pluralité de plaques dans la même couche dans la partie non porteuse ; et
dans lequel l'au moins une des couches du noyau comporte également une région de transition entre la partie porteuse et la partie non porteuse.

2. Noyau selon la revendication 1, dans lequel un pas de la pluralité d'ailettes ondulées dans la première partie porteuse est inférieur au pas de la pluralité d'ailettes ondulées dans la même couche dans la partie non porteuse.

3. Ensemble échangeur de chaleur comprenant :
un support (118) pour supporter un échangeur de chaleur dans un système ; et
un noyau d'échangeur de chaleur (112) selon une quelconque revendication précédente.

4. Procédé de fabrication d'un échangeur de chaleur, le procédé comprenant :
la formation d'un boîtier pour un noyau d'échangeur de chaleur ;
la formation d'une première partie de support ;
la fabrication de manière additive d'un noyau d'échangeur de chaleur selon l'une quelconque des revendications 1 ou 2, l'étape comprenant :
la formation de la première région porteuse en liaison avec le support ; et
la formation de la première région non porteuse vers l'extérieur de la région non porteuse.

5. Procédé selon la revendication 4, dans lequel le noyau comporte une topologie différente dans la première région porteuse que dans la première région non porteuse.

6. Procédé selon la revendication 4 ou 5, comprenant en outre :
la formation d'un support pour un ensemble échangeur de chaleur ; et
la formation d'un seul tenant du support avec au moins une paroi centrale ou au moins une paroi collectrice de l'ensemble échangeur de chaleur via un ou plusieurs processus de moulage ou un processus de fabrication additive, et de préférence dans lequel le support est formé d'un seul tenant avec au moins un coussinet de support et une plaque d'extrémité du noyau d'échangeur de chaleur.
